# EUROPEAN PATENT APPLICATION

(11) **EP 1 998 579 A1**
(43) Date of publication of application: **03.12.2008**
(21) Application number: 07380155.7
(22) Date of filing: 29.05.2007
(51) Int. Cl.: H04Q 7/32, H04L 12/56

(54) **Wireless modem, and system and method therefor**

(71) Applicant: Teldat S.A., 28760 Tres Cantos Madrid (ES)
(72) Inventor: Iglesias Fernandez, José, 28760 Tres Cantos (MADRID) (ES)
(74) Representative: ABG Patentes, S.L.

(57) **Abstract**

Especially devised to enable increasing the degree of coverage of a router, the module of the invention incorporates a wireless interface (3) which gives access to the wireless network as well as an Ethernet interface (5) whereby, and via the corresponding cable (9), it is connected to the router (8) to access the public or private network (10) and/or the local area network (11). The data transmission is performed by encapsulation of the data which arrives through the wireless connection (3) in packets which are transmitted via the Ethernet network (9) to the router (8), which is in charge of decapsulating them (14) and suitably processing them, whilst in the data flow in the opposite direction, the packets are encapsulated and sent to said module by means of packets which are transmitted by the Ethernet network (9) and which are decapsulated in the module for their sending via the wireless connection (3).

## Description

### TECHNICAL FIELD

The present invention is included within the technical field of the wireless extension of a router.

### BACKGROUND OF THE INVENTION

There are currently equipment which give access to public or private networks from a local area network (LAN). This equipment is general purpose, multiprotocol, has a high cost and varied interfaces. When constituting the access equipment, it should be connected on one hand to the local network (local switch) and, on the other hand, to the access points. Both the local switch and the access points are usually located in places with little wireless coverage. To achieve a correct coverage between the router and the network whereto it is connected it is necessary to locate the antenna in the place closest to the outside of the building.

Thus, the equipment which provides the access has a limited coverage, so that for its correct functioning, there are two possible solutions, on one hand to change the location of the access equipment, or instead use long-cable signal amplifiers.

The first of the cases usually presents difficulties as the access equipment is of large size and as it is distanced from the other access points.

In the second case, the use of amplifiers entails a very high cost, to which we also have to add the complexity of the cable layout. The cables_ of LMR-400 type, which are typical for these installations, have suitable characteristics of power loss of approximately 0.223dB/metre at a frequency of 2.4 GHz, but they have diameters in the order of 10.29 millimetres, which hamper their handling and have a very high price.

The object of the invention is to provide a device which permits salvaging the coverage problems in the case that the coverage is deficient in the place of location of the router.

Another object of the invention is to provide a wireless interface to a conventional router which does not have this technology.

### SUMMARY OF THE INVENTION

In order to resolve the aforementioned technical problems as well as others that will be mentioned below when we speak of the advantages thereof, the present invention provides, in a first aspect, an accessory wireless extension module, having the purpose of enabling the increase in degree of coverage of a router connected to a public or private network and/or a local area network. This accessory extension module is characterized in that it comprises an internal control circuit associated to a wireless communications interface, as well as a communication interface with the router through data transmission by encapsulation or packeting via a connection cable between both devices.

Preferably, the communication interface between the module and the router, as well as the connection cable between both pieces of equipment, is of Ethernet type.

The accessory wireless extension module that the invention proposes resolves in a fully satisfactory manner the aforementioned problems stated in the different aspects commented, so that it acts as an extension component of the wireless connection providing suitable coverage, without the need to have to move said router and permitting the use of routers which do not have wireless connection technology, all of this with an extremely effective device, without loss in signal quality and with a reduced cost.

The accessory module according to the invention is of a rather smaller size than the conventional access router. Consequently, it is possible to locate the accessory module according to the invention in the most appropriate place to ensure the wireless connection, using an Ethernet cable connection UTP (Unshielded Twisted Pair) or STP (Shielded Twisted Pair), of reduced cost, flexible and fine and whose length does not affect the quality of the signal transmitted. Furthermore, many modern buildings come equipped with CAT 5 UTP type cables.

With this invention, the cable is economical and can be as long as the Ethernet interface permits, without loss in quality of the wireless signal, since it has already been transformed into a signal of another type (Ethernet frame).

Said accessory wireless extension module will have a serial/console interface to enable the configuration and monitoring thereof.

The present invention provides, in a second aspect, a data transmission method between an accessory wireless extension module and a router, which consists of encapsulating the data which arrives through the wireless connection in packets which are transmitted via a cable to the router, which is in charge of decapsulating them and suitably processing them. In the data flow in the opposite direction, the packets are encapsulated and sent to said module by means of packets which are transmitted through the cable and which are decapsulated in the module for their sending via the wireless connection.

Finally, the present invention also includes a computer program which includes encrypted media designed to carry out the steps of the aforementioned method as a computer-readable medium wherein encrypted media designed to carry out the steps of said method are stored.

### BRIEF DESCRIPTION OF THE DRAWINGS

To complement the description being made and with the object of helping towards a better understanding of the characteristics of the invention, in accordance with a preferred example of practical embodiment thereof, a set of figures is attached as an integral part of the description, wherein the following has been represented with an illustrative non-limitative character:
- Figure 1: Shows a block diagram which represents the diagram of connection of an accessory wireless extension module made in accordance with the object of the present invention.
- Figure 2: Shows a block diagram which represents the encapsulation and decapsulation process in the data transmission between the accessory wireless extension module and the connection router to the corresponding network or networks.

### DESCRIPTION OF A PREFERRED EMBODIMENT

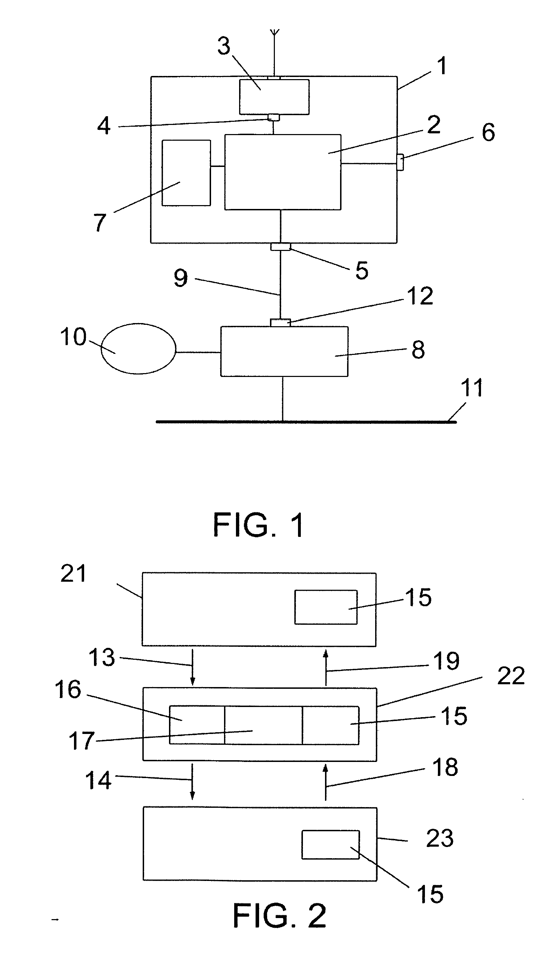

In the light of the figures described, and in particular figure 1, it can be observed how the accessory wireless extension module of the invention is constituted from a casing (1), of reduced dimensions, less than those of a conventional router, a casing (1) wherein an internal control circuit (2) is established associated to a wireless interface (3) or UMTS/HSDPA/HSUPA/HSPA+ module via a USB interface (4).

Said internal control circuit (2) will also be associated to an Ethernet interface (fast Ethernet) (5) and to a serial/console interface (6) to enable the configuration and monitoring thereof, also having the corresponding power supply (7).

The accessory wireless extension module is connected to the router (8) via the corresponding Ethernet interface, by means of a cable (9), flexible and fine, which can equally be UTP or STP type, with a suitable length to enable establishing the accessory wireless extension module in a place wherein the UMTS/HSDPA/HSUPA/HSPA+ module (3) is found with sufficient coverage.

Finally, and as is conventional, the router (8) will be connected to a public or private network (10) and/or a local area network (11).

From the functional point of view, the router sees the connection (9) to the accessory wireless extension module (1) as if it were just another USB interface, so that when the router-accessory module connection is produced, the router behaves as if the UMTS/HSDPA/HSUPA/HSPA+ (3) module was connected within the router itself (virtual USB interface of the router), for which the Ethernet (9) link will be as transparent as possible, until the point where for the purposes of the protocols that are mounted on the system (IP, PPP, bridge,...), there is no Ethernet interface.

This transparency is achieved by an encapsulation process of the USB data within frames which may be transmitted through said Ethernet interface, as has been represented in figure 2.

Thus, in the functioning process of the system of the invention, in first place the accessory wireless extension module starts up and after a general checking of the system, it is connected on one hand to the Ethernet network (9) which connects it to the router (8) and on the other hand to the wireless network, via the UMTS/HSDPA/HSUPA/HSPA+ module (3). When the connection has been successfully made in both interfaces, the data flow is produced in both directions, as can be seen in said figure 2.

Figure 2 shows the format 21 of the packet in the USB interface of the wireless module, the format 22 of the packet in the Ethernet interface and the format 23 of the packet in the virtual USB interface of the router.

In this regard, in the data transmission between the wireless module (3) and the router (8) the accessory wireless extension module encapsulates (13) via its internal control circuit (2) the data which arrives through the wireless connection in packets which may be transmitted through the Ethernet network (9) sending them to the router (8), which will be in charge of decapsulating them (14) and suitably processing them. The encapsulation consists of adding all the necessary information to the data packet of USB interface (15) so that it can reach the router (8). Consequently, the packet contains a header (16) with the address (16) of the Ethernet interface (12) of the router, destination address and the address of the Ethernet interface of the accessory module (5), source address, as well as a header (17) with information which identifies the USB interface which is being encapsulated, to enable the coexistence of several USB interfaces simultaneously, so that in the example of practical embodiment of figure 2, the data corresponds to USB interface number 0 (USBO).

For data transmission from the router (8) to the wireless module (3) the packets are encapsulated (18) by the router (8) and sent to the accessory module by means of packets which can be transmitted through the Ethernet network (9). Once decapsulated (19) in said module, they are sent to the wireless connection, so that the packet should contain the address of the Ethernet interface of the accessory module, destination address, the address of the Ethernet interface of the router, source address, as well as information which identifies the USB interface which is being encapsulated to enable the coexistence of several USB interfaces simultaneously, the data in the example of the figure corresponding to USB interface number 0.

## Claims

1. Accessory wireless extension module, which having the purpose of increasing the degree of coverage of a router (8) connected to a public or private network and/or a local area network, is **characterized in that** it comprises an internal control circuit (2) associated to a wireless communications interface (3), as well as a communication interface (5) with the router (8) through data transmission by encapsulation or packeting via a connection cable between both devices.

2. Accessory wireless extension module, according to claim 1, **characterized in that** the communication interface between the module and the router (8), as well as the connection cable between both pieces of equipment, is of Ethernet type.

3. Accessory wireless extension module, according to claim 1 or 2, **characterized in that** the wireless communications interface (3) is materialized in a UMTS/HSDPA/HSUPA/HSPA+ module associated to the internal control circuit via a USB interface (4).

4. Accessory wireless extension module, according to any of claims 1-3, **characterized in that** the internal control circuit (2) is also associated to a serial/console interface (6) to enable the configuration and monitoring thereof.

5. Accessory wireless extension module, according to any of claims 1-4, **characterized in that** it incorporates a power supply (7).

6. System, which comprises an accessory module according to any of claims 1-5 and a router (8).

7. A data transmission method between an accessory wireless extension module and a router, **characterized in that** it consists of encapsulating (13) the data which arrives through the wireless connection (3) in packets which are transmitted via a cable (9) to the router (8), which is in charge of decapsulating them (14) and suitably processing them, whilst in the data flow in the opposite direction, the packets are encapsulated (18) and sent to said module by means of packets which are transmitted by the cable (9) and which are decapsulated (19) in the module for their sending via the wireless connection (3).

8. The data transmission method between an accessory wireless extension module and a router, according to claim 7, **characterized in that** the communication interface between the module and the router (8), as well as the connection cable between both pieces of equipment is of Ethernet type.

9. The data transmission method between an accessory wireless extension module and a router, according to claim 8, **characterized in that** the encapsulation consists of adding all the necessary information to the data packet of the USB interface (15) so that it can reach the router (8), said packet containing the address (16) of the Ethernet interface (12) of the router, destination address, the address of the Ethernet interface of the accessory module (5), source address, as well as information (17) which identifies the USB interface which is being encapsulated.

10. Computer program which includes encrypted media designed to carry out the steps of the method according to any of claims 7 to 9.

11. Computer-readable medium wherein encrypted media designed to carry out the steps of the method according to any of the claims 7 to 9 is stored.
